# EUROPEAN PATENT APPLICATION

(11) **EP 1 460 279 A1**
(43) Date of publication of application: **22.09.2004**
(21) Application number: 04000266.9
(22) Date of filing: 08.01.2004
(51) Int. Cl.: F16B 33/00, B60C 29/02

(54) **Tire valve nut and tire valve**

(30) Priority: 17.03.2003 JP 2003072362
(71) Applicant: Pacific Industrial Co., Ltd., Ogaki-shi, Gifu-ken 503-8603 (JP)
(72) Inventor: Saheki, Setsuhiro, Ogaki-shi Gifu-ken 503 8603 (JP)
(74) Representative: Geyer, Werner, Dr.-Ing.

(57) **Abstract**

A tire valve nut (10) for mounting a valve stem (20) to a wheel (30) in the valve hole (31) of the wheel (30). The valve stem (20) is used to charge air into a tire mounted on the wheel. The tire valve nut (10) includes a shoulder (12) formed along an inner wall of the tire valve nut(10) at a lower end of the tire valve nut (10). An elastic body (13) is arranged in the shoulder (12).

## Description

The present invention relates to a tire valve nut for mounting a valve stem to a wheel in the valve hole of the wheel, and to a tire valve including such a tire valve nut and valve stem.

In the prior art, so-called clamp-in valves are often used as tire valves for vehicles. A clamp-in valve includes a valve stem, which has a distal portion inserted through a valve hole of a wheel to fix the valve stem in the valve hole. A grommet, which is attached to the basal portion of the valve stem and arranged between the wall of the valve hole and the valve stem, is arranged in contact with the wall of the valve hole and seals the tire.

The Japanese Standards Association describes such a tire valve in pp. 1400 - 1408, automobile tire valve, JIS D4207, "JIS Handbook, 2001 (18) Automotive Parts". According to the publication, when mounting a valve stem in the valve hole, the valve stem is inserted through the valve hole and projected outward from the wheel. In this state, a valve nut is fastened to the valve stem from the outer side of the valve hole. A valve washer may be arranged on the tire valve before fastening the tire valve nut to the valve stem. Accordingly, the valve washer or the tire valve nut, each of which is made of metal, is arranged at the outer side of the valve hole.

However, when such a metal valve washer or metal tire valve nut is arranged at the outer side of the valve hole, the tire valve nut contacts the valve washer or the metal wheel. This forms a slight gap, for example, between the tire valve and the wheel. Moisture or foreign articles may enter such slight gap and corrode the tire valve nut, the valve stem, and the valve hole of the wheel.

It is an object of the present invention to provide a tire valve nut and a tire valve that prevents moisture and foreign articles from entering the valve hole of a wheel.

To achieve the above object, the present invention provides a tire valve nut for mounting a valve stem to a wheel in a valve hole of the wheel. The tire valve nut includes a shoulder formed along an inner wall of the tire valve nut at a lower end of the tire valve nut. An elastic body is arranged in the shoulder.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1(a) is a plan view showing a tire valve nut;
Fig. 1(b) is a partial cross-sectional view showing the tire valve nut;
Fig. 2(a) is a partial cross-sectional view showing a valve stem mounted to a wheel in the valve hole thereof; and
Fig. 2(b) is an enlarged cross-sectional view showing the portion encircled by broken lines in Fig. 2(a).

A tire valve nut 10 according to a preferred embodiment of the present invention will now be discussed with reference to the drawings.

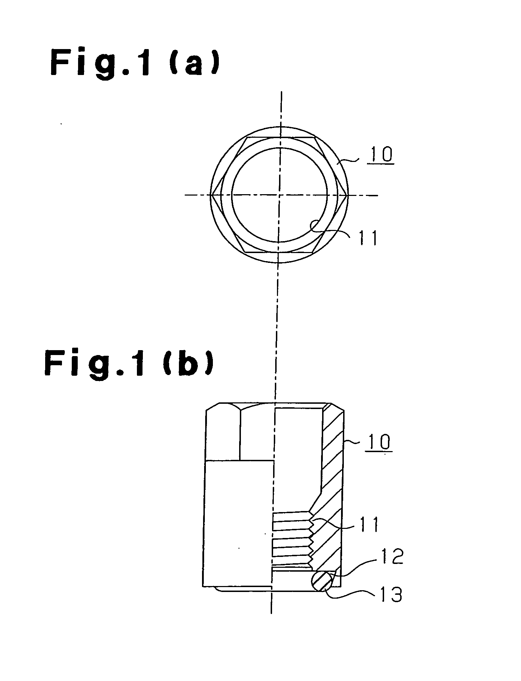

As shown in Figs. 1(a) and 1(b), the tire valve nut 10 is generally cylindrical. The tire valve nut 10 has a hexagonal upper portion. A threaded nut portion 11 is formed in the tire valve nut 10 to engage a valve stem 20. A shoulder 12 extends along the inner wall of the tire valve nut 10 under the threaded nut portion 11, or in the lower end of the tire valve nut 10. The shoulder 12 has a lower end and an upper end as viewed in Fig. 1(b). The diameter of the shoulder 12 at the upper end is greater than that of the shoulder 12 at the lower end. Thus, the shoulder 12 is inclined from the lower end to the upper end.

An O-ring 13 is arranged in the shoulder 12. The outer diameter of the O-ring 13 is greater than the inner diameter of the shoulder 12. Thus, the O-ring 13 is inserted in the shoulder 12 by reducing its diameter against its own elasticity. After being inserted in the shoulder 12, the elasticity of the O-ring 13 returns the O-ring 13 to its original shape. This holds the O-ring 13 in the shoulder 12. When arranged in the shoulder 12, the inner diameter of the O-ring 13 is greater than the inner diameter of the threaded nut portion 11. Thus, the O-ring 13 does not come into contact with the valve stem 20 when the tire valve nut 10 is fastened to the valve stem 20. Accordingly, the O-ring 13 is not damaged by the fastening of the tire valve nut 10. It is preferred that the material of the O-ring 13 be rubber, especially, ethylene propylene dyne monomer (EDAM), which has superior weather resistant properties.

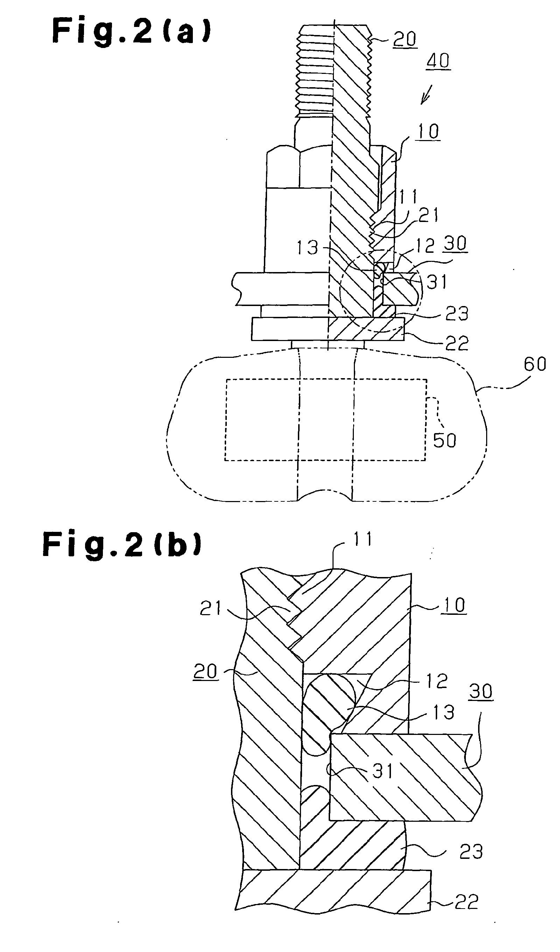

Referring to Figs. 2(a) and 2(b), the valve stem 20, which is used to charge air into a tire, includes a threaded valve portion 21. The threaded valve portion 21 is fastened with the tire valve nut 10 when mounting the valve stem 20 to a wheel 30 in the valve hole 31 of the wheel 30. A bushing 22 is press-fitted to the lower end of the valve stem 20. A grommet 23 is attached above the bushing 22 to a basal portion of the valve stem 20 extending in the circumferential direction of the valve stem 20. The grommet 23 is arranged between the valve stem 20 and the wall of the valve hole 31 in the wheel 30 to keep the tire sealed.

When mounting the valve stem 20 to the wheel 30 in the valve hole 31, the distal portion of the valve stem 20 is inserted through the valve hole 31 from the inner side of the wheel 30. Then, the grommet 23 attached to the basal portion of the valve stem 20 comes into contact with the wall of the valve hole 31. In this state, the tire valve nut 10 is fastened to the threaded valve portion 21 of the valve stem 20. This causes part of the O-ring 13 to come into contact with the wall of the valve hole 31. Further, the fastening of the tire valve nut 10 to the threaded valve portion 21 of the valve stem 20 elastically deforms the O-ring 13 so that the O-ring 13 enters the valve hole 31. As a result, the O-ring 13 comes into contact with the wall of the valve hole 31 in the wheel 30. This ensures the seal of the tire from the outer side of the wheel 30 and prevents foreign articles from entering the space between the O-ring 13 and the wall of the valve hole 31. Accordingly, corrosion of the valve stem 20 and the wheel 30 is prevented.

In addition, the fastening of the tire valve nut 10 to the threaded valve portion 21 of the valve stem 20 presses the lower end of the tire valve nut 10 and the O-ring 13 against the wheel 30. The tire valve nut 10 and the wheel 30 are made of metal. Once the tire valve nut 10 is fastened, the force that acts to loosen the nut 10 is less in comparison with when a rubber or synthetic component, such as a grommet, is interposed between the entire lower end of a tire valve nut and a wheel. Accordingly, the fastening force of the tire valve nut 10 is prevented from decreasing. When a rubber or synthetic resin component is interposed between the entire lower end of a tire valve nut and a wheel, the rubber or synthetic resin component would deteriorate when used over a long period. This would decrease the fastening force of the tire valve nut 10 and loosen the tire valve nut 10.

The fastening of the tire valve nut 10 also elastically deforms the grommet 23, which is attached to the valve stem 20, in the valve hole 31 of the wheel 30. As a result, the grommet 23 comes into close contact with the wall of the valve hole 31 in the wheel 30. This ensures the seal of the tire from the inner side of the wheel 30.

The preferred embodiment described above has the advantages described below.
(1) The shoulder 12 is formed in the lower end of the tire valve nut 10. The O-ring 13 is arranged in the shoulder 12. After inserting the valve stem 20 through the valve hole 31, the tire valve nut 10 is fastened to the valve stem 20. As a result, the O-ring 13 comes into contact with the wall of the valve hole 31. This prevents moisture and foreign articles from entering the valve hole 31. Consequently, corrosion of the tire valve nut 10, the valve stem 20, and the valve hole 31 of the wheel 30 is prevented.
(2) When the tire valve nut 10 is fastened to the threaded valve portion 21 of the valve stem 20, the lower end of the tire valve nut 10 and the O-ring 13 are pressed against the wheel 30. Since the tire valve nut 10 and the wheel 30 are made of metal, the fastening force of the tire valve nut 10 is prevented from decreasing due to the reasons described above.
(3) The fastening of the tire valve nut 10 to the threaded valve portion 21 of the valve stem 20 elastically deforms the O-ring 13 so that the O-ring 13 enters the valve hole 31. The fastening of the tire valve nut 10 also elastically deforms the grommet 23 attached to the valve stem 20 and causes the grommet 23 to enter the valve hole 31 of the wheel 30. As a result, the O-ring 13 and the grommet 23 come into close contact with the wall of the valve hole 31 in the wheel 30. This hermetically seals the tire from the inner and outer sides of the wheel 30 at the valve hole 31.
(4) The outer diameter of the O-ring 13 is greater than the inner diameter of the shoulder 12. Thus, the elasticity of the O-ring 13 holds the O-ring 13 in the shoulder 12. Accordingly, the O-ring 13 is easily held in the shoulder 12. In other words, the task of, for example, adhering the O-ring 13 to the shoulder 12 does not have to be performed.
(5) The shoulder 12 is formed under the threaded nut portion 11 of the tire valve nut 10 along the inner wall in the lower end of the tire valve nut 10. In other words, the threaded nut portion 11 is separated from the shoulder 12. Thus, the O-ring 13 is not damaged since the O-ring 13 does not enter the threaded nut portion 11. Accordingly, the durability of the O-ring 13 is ensured even if the tire valve nut 10 is repetitively fastened to the valve stem 20. Further, the durability of the O-ring 13 is improved.
(6) The O-ring 13 and the grommet 23 are in contact with the wall of the valve hole 31 and the surface of the wheel 30 around the valve hole 31. Thus, when the vibration of the tire produced when the vehicle is being driven is conveyed to the valve hole 31 of the wheel, the elastic O-ring 13 and grommet 23 absorb the vibration. This keeps the valve stem 20 mounted to the wheel 30 in the valve hole 31 over a long period of time.

It should be apparent to those skilled in the art that the present invention may be embodied in many other specific forms without departing from the spirit or scope of the invention. Particularly, it should be understood that the present invention may be embodied in the following forms.

The O-ring 13 may have a round, elliptic, or polygonal cross-sectional shape. It is preferred that the O-ring 13 arranged in the shoulder 12 have a cross-sectional shape that does not interfere with the threaded valve portion 21 when the tire valve nut 10 is fastened to the threaded valve portion 21 of the valve stem 20. That is, it is only required that the inner diameter of the O-ring 13 be greater than the inner diameter of the threaded nut portion 11 in a state in which the O-ring 13 is arranged in the shoulder 12. In other words, it is only required that the inner diameter of the O-ring 13 be greater than the outer diameter of the threaded valve portion 21 in a state in which the O-ring 13 is arranged in the shoulder 12.

A transmitter for a tire condition monitoring apparatus, which measures a tire condition to generate data indicating the condition of the tire and transmits the data, may be connected to the lower end of the valve stem 20. The condition of the tire refers to the air pressure and temperature of the tire. More specifically, as shown in the state of Fig. 2(a), for example, insert molding may be performed to attach a casing 60, which accommodates a transmitter 50 of a tire condition monitoring apparatus, to the lower end of the valve stem 20.

The present examples and embodiments are to be considered as illustrative and not restrictive, and the invention is not to be limited to the details given herein, but may be modified within the scope and equivalence of the appended claims.

## Claims

1. A tire valve nut for mounting a valve stem to a wheel in a valve hole of the wheel, the tire valve nut being **characterized by**:
a shoulder formed along an inner wall of the tire valve nut at a lower end of the tire valve nut; and
an elastic body arranged in the shoulder.

2. The tire valve nut according to claim 1, **characterized in that** the tire valve nut and the elastic body come into contact with the wheel when the valve stem is mounted to the wheel in the valve hole.

3. The tire valve nut according to claim 1 or 2, **characterized in that** the elastic body is ring-like and has an outer diameter that is greater than an inner diameter of the shoulder.

4. The tire valve nut according to any one of claims 1 to 3, **characterized in that** the inner wall of the tire valve nut includes a threaded portion fastenable to the valve stem, with the threaded portion being separated from the shoulder.

5. A tire valve being **characterized by**:
the tire valve nut according to any one of claims 1 to 4;
a valve stem for charging air in a tire;
a grommet attached to the valve stem and contacting a wall of the valve hole to seal the tire when the valve stem is mounted to the wheel.

6. The tire valve according to claim 5, further being **characterized by**:
a transmitter that measures a condition of the tire to generate and transmit data.
